# FASCICULE DE BREVET EUROPEEN

(11) **EP 0 992 316 B1**
(45) Date de publication et mention de la délivrance du brevet: **24.07.2002**
(21) Numéro de dépôt: 99203266.4
(22) Date de dépôt: 06.10.1999
(51) Int. Cl.: B23Q 3/18, B23Q 1/54

(54) **Dispositif manuel de correction du positionnement du corps d'une électro-broche par rapport à son support**
Handbetätigte Vorrichtung zur Richtigstellung der Position einer Elektrospindel bezüglich eines Trägers
Manually operable device for correcting the position of an electric spindle with respect to its holder

(30) Priorité: 07.10.1998 FR 9812663
(43) Date de publication de la demande: 12.04.2000
(73) Titulaire: Renault Automation Comau, 92365 Meudon La Forêt Cedex (FR)
(72) Inventeur: Calmes, André, 81100 Castres (FR)
(74) Mandataire: Richebourg, Michel François

(56) Documents cités:
- EP-A- 0 355 318
- WO-A-82/00218
- DE-A- 2 449 364
- GB-A- 1 238 463
- US-A- 3 689 017
- PATENT ABSTRACTS OF JAPAN vol. 10, no. 227 (M-505) [2283], 7 août 1986 (1986-08-07) & JP 61 061747 A (OKUMA MACH WORKS LTD), 29 mars 1986 (1986-03-29)

## Description

### DOMAINE D'APPLICATION DE L'INVENTION

La présente invention a trait au domaine des machines-outils; et notamment aux adaptations assurant le positionnement optimal des électro-broches porte-outil par rapport à leur support ainsi que par rapport au plan de déplacement de ce support.

### DESCRIPTION DE L'ART ANTÉRIEUR

Une électro-broche est un organe d'entraînement en rotation d'un outil, qui peut être placé à l'intérieur d'un coulant de machine-outil, lequel coulant peut être mobile en translation selon trois axes.

Les cahiers des charges d'usinages à réaliser par les dites machines-outils définissant des critères de précision d'usinage très élevés, il est nécessaire d'obtenir une précision optimale dans le positionnement de chaque élément participant au positionnement de l'outil par rapport à la pièce et notamment au positionnement de l'électro-broche porte-outil et de son support comme par exemple un coulant porte électro-broche.

Dans la chaîne de côtes allant de l'outil jusqu'au moyen d'entraînement, un autre défaut de positionnement peut venir du coulant lui même par rapport au plan de déplacement perpendiculaire à son axe.

En fait, l'empilement successif d'éléments crée, en fin de chaîne de côtes, une somme trop élevée des tolérances de défauts.

Pour atteindre le niveau de précision demandé, les concepteurs et utilisateurs de machine-outil ou d'éléments de machine-outil telle l'électro-broche n'ont eu jusqu'à maintenant pour seule solution que celle consistant à usiner très précisément les surfaces de positionnement de l'électro-broche et les surfaces d'appui prévues à cet effet dans le coulant. Ces opérations entraînent non seulement des surcoûts dans la réalisation de la machine-outil mais n'atteignent pas toujours la précision requise.

Aussi, aux opérations d'usinage de grande précision des surfaces en contact, viennent s'ajouter des opérations de grattage desdites surfaces, opérations spécifiques à chaque machine afin d'atteindre la précision demandée. Ces opérations de mise au point peuvent avoir une durée aléatoire et peuvent retarder la date de mise en marche de la machine-outil. De même, la mise au point doit être revue à chaque changement d'électro-broche, opération qui se réalise relativement souvent dans le domaine des usinages à très grande vitesse.

La réalisation d'une opération de mise au point spécifique pour chaque machine-outil ou à chaque électro-broche pour arriver à la précision de positionnement requise, est incompatible avec une politique d'industrialisation poussée dans la réalisation des machines-outils elles-mêmes.

L'arrière-plan technologique dans ce domaine ne propose aucune solution spécifique à la correction du positionnement du corps d'une électro-broche par rapport à son support à savoir, dans le domaine de l'usinage à grande vitesse par rapport à un coulant porte électro-broche.

Bien entendu, il existe des dispositifs de positionnement d'un corps par rapport à l'autre tel ceux décrits dans les brevets US 3,689,017, DE 2449364, GB 1 238 463, mais ces dispositifs comme leur nom l'indique, ont pour fonction de donner une orientation à un corps par rapport à une autre et non de corriger la position déjà précise d'un corps. Aussi, les dispositifs de l'art antérieur répondent à un autre besoin que celui auquel répond l'invention et comportent des caractéristiques et des modes de réalisation susceptibles de s'adapter à d'autres domaines que celui de l'invention, à savoir la correction du positionnement du corps d'une électro-broche par rapport à son support.

### BRÈVE DESCRIPTION DE L'INVENTION

La demanderesse a donc mené des recherches ayant pour but de supprimer ou du moins de réduire les opérations d'usinage très précis nécessaires jusqu'à aujourd'hui, au bon positionnement d'une électro-broche par rapport à son support ainsi que de supprimer ou du moins de diminuer la durée des opérations de mise au point de la machine-outil pour le positionnement de l'électro-broche par rapport à son support à des fins de respect de la perpendicularité nécessaire entre l'axe de l'outil et son plan de déplacements latéraux.

Ces recherches ont abouti à la conception originale d'un ensemble formé d'un dispositif manuel de correction d'une électro-broche et d'un coulant permettant de répondre aux besoins de correction du positionnement angulaire d'une électro-broche par rapport à l'autre, mais aussi d'assurer le positionnement angulaire de tout type de corps par rapport à son support et/ou par rapport à toute autre référence.

L'ensemble de l'invention est formé d'un dispositif manuel de correction, d'une électro-broche et d'un coulant, ledit ensemble assurant la correction du positionnement de l'axe d'une électro-broche par rapport au coulant dans lequel elle est emmanchée, ladite électro-broche comprenant une collerette d'appui et un corps arrière cylindrique, ledit coulant comprenant également une surface d'appui. Ce dispositif est du type de celui qui, comme illustré dans le document DE 2449364, est constitué par l'association de deux rondelles formant cales de réglage en contact constant l'une avec l'autre s'intercalant entre ladite collerette et ladite surface d'appui et de positionnement du coulant, une première rondelle de réglage étant en contact sur sa surface extérieure avec la collerette d'appui de l'électro-broche et la deuxième rondelle étant en contact sur sa surface extérieure avec la surface d'appui et de positionnement du coulant support, les surfaces de contact intérieures des deux rondelles définissant un plan incliné par rapport auxdites surfaces extérieures desdites rondelles et constitué par les surfaces intérieures en pente desdites rondelles, ces dernières adoptant une position dite neutre l'une par rapport à l'autre de façon à ce que les plans d'appui définis par les surfaces extérieures desdites rondelles soient sensiblement parallèles et que tout déplacement en rotation d'une rondelle par rapport à l'autre à partir de cette position neutre provoque le déplacement angulaire du corps par rapport audit support.

Selon l'invention, cet ensemble est remarquable en ce que lesdites rondelles sont emmanchées sur le corps arrière cylindrique de ladite électro-broche, et réalisées de telle façon que leur diamètre extérieur soit supérieur au diamètre du cylindre formé par l'épaulement ménagé dans le coulant, chaque rondelle comportant une languette autorisant sa rotation, de sorte que la rotation selon un premier angle de l'ensemble formé par les deux rondelles autour de leur axe de rotation associée à la rotation selon un deuxième angle des deux rondelles indépendamment l'une de l'autre et en sens inverse, permette la correction du positionnement de l'axe de l'électro-broche par rapport à son coulant support.

Cette solution technologique est particulièrement avantageuse en ce qu'elle permet d'envisager un rattrapage du défaut angulaire de l'axe de l'outil par rapport à son plan de déplacement théoriquement perpendiculaire, en réalisant une modification du positionnement du corps de l'électro-broche par rapport à son coulant support en intercalant dans leur liaison un dispositif qui autorise une correction du positionnement. Les usinages des surfaces d'appui ne nécessitent donc pas une grande précision du fait que le défaut de positionnement sera mesuré puis rattrapé au moyen du dispositif. La présence d'une position dite neutre dans laquelle les plans d'appuis définis par les surfaces extérieures sont parallèles, permet en outre, de créer une position de référence dans l'assemblage dans lequel s'intercale le dispositif de positionnement, position de référence sur laquelle sera mesuré le défaut de positionnement du corps par rapport au support et à partir de laquelle les rondelles seront mises en mouvement pour rattraper le défaut de positionnement.

L'utilisation selon une caractéristique particulièrement avantageuse de rondelles identiques rendues coaxiales par leur emmanchement avec le corps cylindrique de l'électro-broche permet de proposer une position neutre défini simplement par le positionnement de la partie la plus mince d'une première rondelle sur la partie la plus épaisse de l'autre. En outre, l'adoption de rondelles coaxiales permet d'envisager un simple mouvement de rotation des rondelles rendant la mise au point particulièrement facile.

L'interposition d'un dispositif de correction autorise la suppression des opérations de grattage des surfaces d'appui ce qui constitue un gain considérable dans le temps de mise au point d'une machine-outil. De plus, le changement d'une électro-broche devient une opération banale cessant de remettre en cause la précision de l'usinage à chaque changement.

### BRÈVE DESCRIPTION DES DESSINS

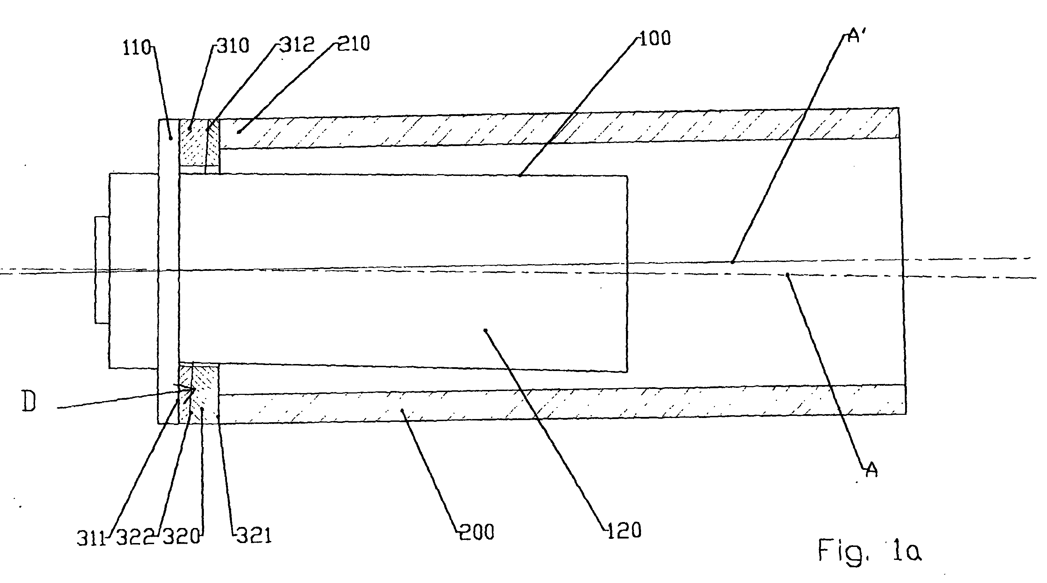

La figure 1a est une vue schématique en coupe de côté d'un assemblage d'une électro-broche avec son coulant, adoptant un mode de réalisation d'un dispositif de correction de positionnement conforme à l'invention, l'électro-broche présentant un défaut de positionnement par rapport au coulant,

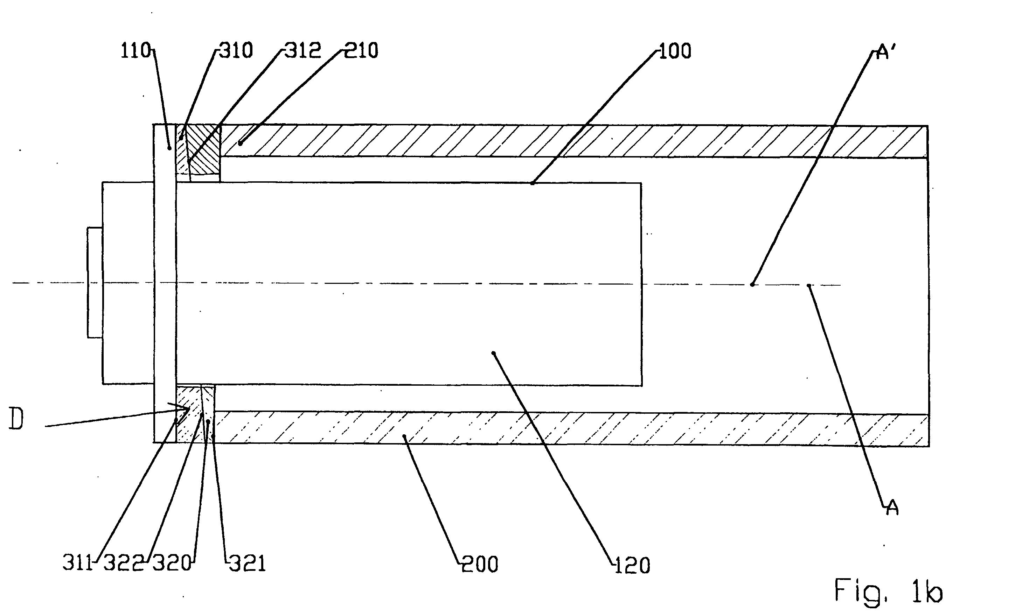

la figure 1b est la même vue que celle de la figure 1a, avec un positionnement corrigé de l'électro-broche par rapport à son coulant,
La figure 2a est une vue avant schématique de l'assemblage de la figure 1, avec le dispositif de positionnement en position neutre,
La figure 2b est une vue avant schématique de l'assemblage de la figure 1 avec le dispositif de positionnement en position de correction,
La figure 3 est une vue d'ensemble en perspective éclatée, d'un mode de réalisation du dispositif de correction de l'invention, s'interposant entre la collerette d'une électro-broche et l'épaulement intérieur du coulant prévu pour l'appui de cette dernière,
La figure 4 est une vue en coupe plus détaillée de l'assemblage formé par le coulant, d'un mode de réalisation du dispositif de l'invention et l'électro-broche.

### DESCRIPTION DES MODES DE RÉALISATION PRÉFÉRÉS

Telle qu'illustrée à la figure la, une électro-broche porte-outil 100 est emmanchée dans un coulant 200, montage classique d'une machine-outil d'usinage comprenant un coulant mobile sur trois axes par exemple. Ladite électro-broche 100 comprend une collerette de positionnement et de serrage 110 venant classiquement en appui sur une surface d'appui et de positionnement 210 ménagée à cet effet sur le coulant 200. Tel qu'illustré, l'axe A de l'électro-broche 100 n'est pas coaxial à l'axe A' du coulant 200.

Conformément à l'invention, un dispositif de correction de positionnement référencé D dans son ensemble s'intercale entre la collerette de positionnement et de serrage 110 de l'électro-broche 100 et la surface d'appui 210. Ce dispositif D se compose de deux rondelles 310 et 320 identiques et coaxiales emmanchées sur la surface cylindrique dudit corps 120 de ladite électro-broche 100, une première rondelle 310 étant au moyen de sa surface extérieure 311 en appui sur la collerette 110 dudit corps cylindrique 120 de l'électro-broche 100, la surface extérieure 321 de la deuxième rondelle 320 étant en contact avec la surface d'appui 210 du coulant 200 de façon à ce que la rotation selon un premier angle de l'ensemble formé par les deux rondelles 310 et 320 autour de leur axe de rotation associée à la rotation selon un deuxième angle des deux rondelles 310 et 320 indépendamment l'une de l'autre et en sens inverse, permette la correction du positionnement de l'axe A du corps cylindrique 320 de l'électro-broche 100 par rapport à l'axe A' du coulant 200 qui l'accueille.

En effet, les surfaces intérieures 312 et 322 des deux rondelles 310 et 320 forment un plan de déplacement incliné par rapport aux surfaces extérieures de contact respectivement 311 et 321. La correction du positionnement permet d'obtenir les deux axes A et A' confondus lorsque le défaut à corriger est simplement constitué par le défaut de positionnement de l'électro-broche 100 par rapport à son coulant.

Le principe d'utilisation du dispositif de correction de positionnement D conforme à l'invention consiste à réaliser le montage de l'électro-broche 100 dans le coulant 200 d'une machine-outil mobile sur trois axes dont deux perpendiculaires à l'axe du coulant, en intercalant le dispositif D en position neutre entre leur surface de contact et de positionnement respective puis à mesurer le défaut de perpendicularité entre l'axe de rotation de l'outil et le plan de déplacement théoriquement perpendiculaire à l'axe du coulant. Cette mesure permet de déterminer après calcul l'angle de plus grand défaut dit angle Δ.

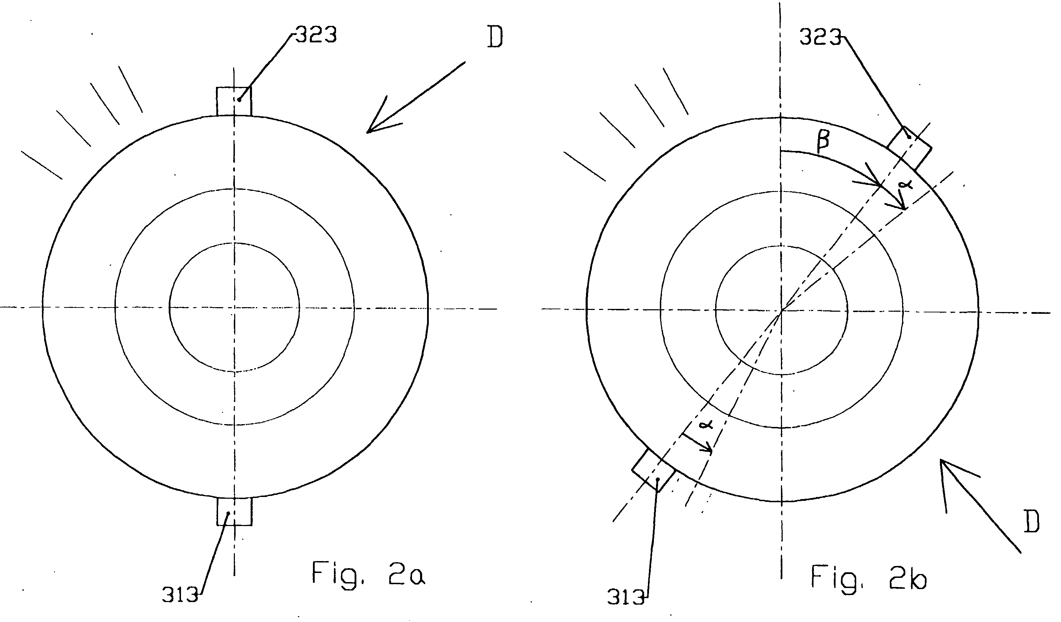

Pour permettre le rattrapage de ce défaut de positionnement qui est constitué en fait par le défaut de positionnement non seulement de l'électro-broche par rapport au coulant mais aussi du coulant par rapport au plan de déplacement perpendiculaire à son axe, le dispositif D est actionné en deux fois tel qu'illustré sur les dessins des figures 2a et 2b.

En effet, à partir d'une position neutre du dispositif D où les surfaces de contact extérieures des rondelles sont parallèles, un entraînement en rotation des deux rondelles à la fois dans le même sens respecte le parallélisme initial. Si la rotation est imprimée à une seule rondelle, le positionnement de l'électro-broche change mais ne peut être paramétré. Une rotation indépendante selon le même angle des deux rondelles mais en sens inverse l'une par rapport à l'autre permet de situer la zone d'actionnement angulaire du dispositif D par rapport à l'électro-broche 100 précisément.

Le défaut angulaire de positionnement étant situé dans l'espace et non dans un plan précis, il est nécessaire de pré-positionner angulairement l'ensemble du dispositif D en position neutre par rapport au support 200 selon un premier angle β de façon à placer puis à actionner les deux rondelles 310 et 320 selon le même angle a mais en sens inverse par rapport à leur axe de rotation.

Afin de faciliter la manipulation du dispositif D, les deux rondelles 310 et 320 comportent chacune des moyens constitués par des languettes 313 et 323 permettant leur rotation par un manipulateur.

Selon une caractéristique particulièrement avantageuse de l'invention, ledit coulant 200 comporte des moyens de repérage de la course angulaire réalisée par lesdites languettes 313 et 323.

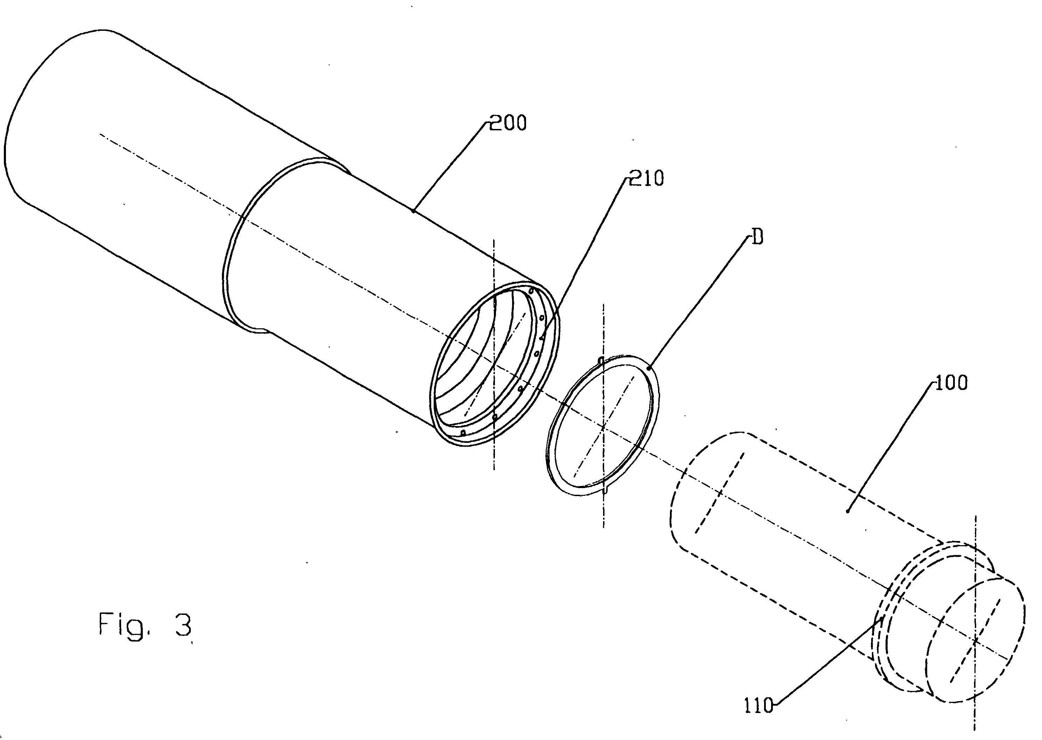

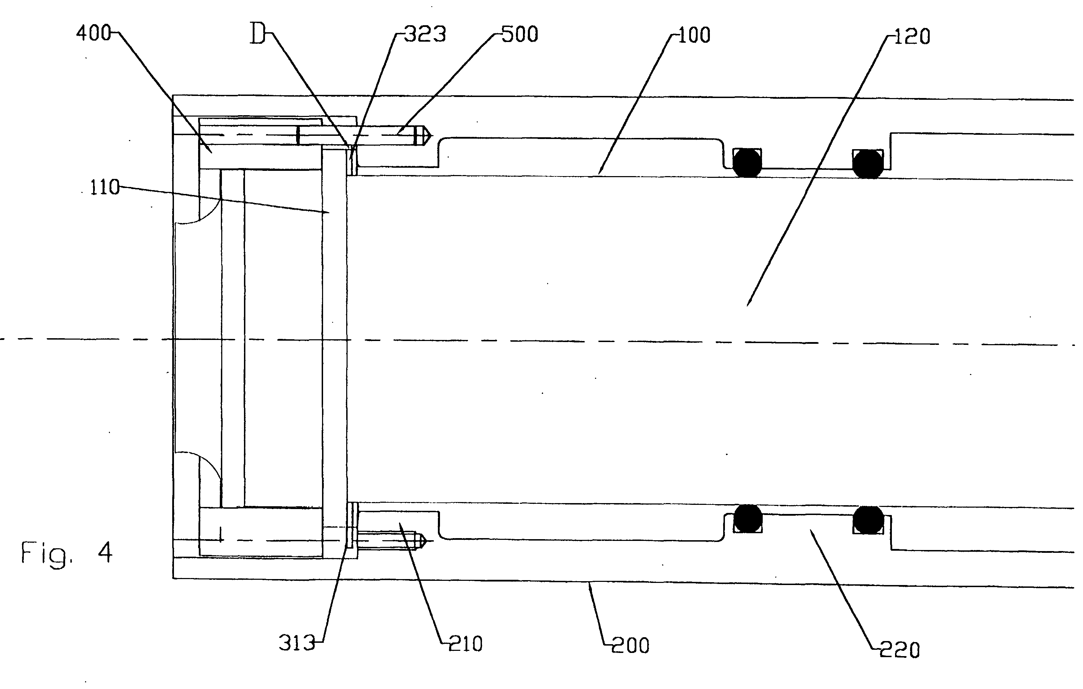

Les figures 3 et 4 illustrent de manière plus précises les modes de réalisation du coulant 200 et de l'électro-broche 100 auquel le dispositif D peut s'adapter.

Ainsi, le dispositif D ne requiert aucune modification de montage d'une électro-broche par rapport à son coulant mais s'interpose simplement entre leurs surfaces respectives de positionnement et de serrage. Ainsi, classiquement, comme illustré en figure 4, une électro-broche 100 est emmanchée à l'intérieur d'un coulant 200 lequel est ménagé de moyens de maintien du corps arrière 120, constitués par les deux joints toriques placés dans un épaulement arrière 220 et d'un épaulement 210 sur lequel viennent s'appuyer la collerette de positionnement et de serrage 110 de l'électro-broche 100. Le maintien de ce positionnement est classiquement réalisé par une bride 400 venant se visser sur l'épaulement 210 du coulant 200.

Comme illustré, le dispositif D vient se positionner entre la surface avant de l'épaulement 210 du coulant et la surface arrière de la collerette 110 de l'électro-broche 100.

Cette adaptation aux modes de réalisation des coulants et électro-broches permet de faire apparaître plusieurs caractéristiques particulièrement avantageuses du dispositif D de l'invention. Ainsi, par exemple, le diamètre extérieur des rondelles 310 et 320 est déterminé de façon à ce qu'elles puissent prendre appui sur l'épaulement 210 mais également de façon à ce que leur rotation ne soit pas gênée par les pions de positionnement 500 assurant le positionnement angulaire de l'électro-broche 100 par rapport au coulant 200. Néanmoins, les moyens de manipulation 313 et 323 sont réalisés de façon à ce que ces derniers puissent être accessibles et actionnables lorsque la bride 400 est retirée. Ainsi, comme illustré à la figure 4, la longueur des languettes constituant lesdits moyens de manipulation permettent de dépasser le diamètre extérieur de la collerette 110. Aussi, selon le mode de réalisation illustré, les languettes 313 et 323 sont accessibles, une fois la bride 400 retirée, au moyen d'au moins un tournevis. De même, les rondelles 310 et 320 et les languettes 313 et 323 y associées ne dépassent pas le diamètre de la portion cylindrique du coulant 200 dans laquelle elles sont introduites.

Bien entendu, la figure 4 illustre le fait que la rotation d'une rondelle par rapport à l'autre est limitée du fait de la présence du pion de positionnement 500 mais le diamètre de ce dernier n'empêche la rotation des rondelles que sur quelques degrés.

Selon une caractéristique particulièrement avantageuse de l'invention, les deux rondelles 310 et 320 constituant le dispositif D ne sont pas guidées l'une par rapport à l'autre et ne comportent aucun moyen de liaison les gardant en position superposée. En effet, selon le choix technologique de la demanderesse qui a décidé de concevoir un dispositif D dépendant des éléments auxquels il s'adapte, les deux rondelles sont maintenues l'une sur l'autre au moyen de la bride 400 ou du moins du fait de la présence de la collerette 110 de l'électro-broche 100. Ainsi par exemple, c'est l'emmanchement sur le corps cylindrique 120 de l'électro-broche 100 des deux rondelles 310 et 320 qui les rend coaxiales.

Selon une caractéristique particulièrement avantageuse de l'invention, le maintien en position des rondelles 310 et 320 entre elles est réalisé par les moyens de maintien en position de l'électro-broche 100 dans le coulant 200.

Selon un autre mode de réalisation non illustré, au moins une des deux rondelles 310 et 320 est ménagée d'au moins une ouverture autorisant les tiges filetées ou non des moyens de fixation 500 de l'électro-broche 100 dans le coulant 200, à traverser ladite rondelle 310 ou 320 et la maintenir une fois positionnée.

De même, le guidage en rotation est plus ou moins réalisé par la présence du corps arrière cylindrique 120 de l'électro-broche 100. Ces caractéristiques illustrent parfaitement le concept d'un dispositif de correction venant s'intercaler et s'adapter entre des éléments déjà existants. De plus, la vue en coupe illustre les dimensions du dispositif D. En effet, le dispositif D de correction du positionnement adopte un plan de contact ,très faiblement incliné entre les surfaces intérieures des deux rondelles 310 et 320, contrairement aux dispositifs de positionnement de l'art antérieur qui eux ont pour fonction de donner une autre orientation angulaire d'un élément par rapport à l'autre et qui nécessitent en conséquence des plans inclinés adoptant une pente particulièrement importante.

Le procédé de correction pourrait être réalisé de la façon suivante :
- les deux rondelles 310 et 320 étant placées à l'arrière de la collerette 110 de l'électro-broche 100 en opposition l'une par rapport à l'autre, les languettes étant également en opposition telles qu'illustrées à la figure 3,
- l'électro-broche est emmanché dans le coulant 200, la collerette 110 venant en appui avec l'épaulement 210 avec le dispositif D intercalé,
- une bride 400 vient maintenir l'ensemble, un outillage est monté sur l'électro-broche, puis le coulant adopte plusieurs positions de façon à pouvoir définir des points où un palpeur pourra mesurer la position de l'outil,
- à partir de cette mesure, un angle de correction est obtenu,
- la bride 400 est alors dévissée puis les languettes sont déplacées ensemble dans un premier temps puis l'une par rapport à l'autre dans un second temps comme décrit plus haut,
- la bride 400 est alors revissée et la position de l'outillage est de nouveau palpée et mesurée de façon à s'assurer que la correction a bien été réalisée.

Selon l'expérience de la demanderesse, la pente définie par les deux plans inclinés des surfaces intérieures 312 et 322 des rondelles est comprise dans un intervalle allant de 1 pour 10 000 à 1 pour 100. Cet intervalle définissant une pente très faible délimite clairement le domaine d'application de l'invention qui se situe dans la correction de positionnement et non dans le positionnement angulaire d'un corps par rapport à un autre.

On comprend que le dispositif de correction du positionnement qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Ainsi par exemple, il peut être envisagé qu'une des susdites surfaces d'appui et de positionnement 210 ou 110 se substitue à une des deux rondelles. Selon ce choix de conception, la surface d'appui aveç le coulant 200 de la collerette 110 de l'électro-broche 100 peut adopter une pente et/ou la surface d'appui définie par l'épaulement intérieur 210 ménagé dans le coulant 200 peut aussi adopter une pente de façon à reproduire l'assemblage des deux rondelles 310 et 320 constituant le dispositif D en préformant les surfaces d'appui.

## Revendications

1. Ensemble formé d'un dispositif manuel de correction, d'une électro-broche (100) et d'un coulant (200), ledit ensemble assurant la correction du positionnement de l'axe (A) d'une électro-broche (100) par rapport au coulant dans lequel elle est emmanchée, ladite électro-broche comprenant une collerette d'appui (110) et un corps arrière cylindrique (120), ledit coulant (200) comprenant également une surface d'appui (210), ledit dispositif étant du type de celui constitué par l'association de deux rondelles (310 et 320) formant cales de réglage en contact constant l'une avec l'autre s'intercalant entre ladite collerette (110) et ladite surface d'appui et de positionnement (210) du coulant (200), une première rondelle de réglage (310) étant en contact sur sa surface extérieure (311) avec la collerette d'appui (110) de l'électro-broche (100) et la deuxième rondelle (320) étant en contact sur sa surface extérieure (321) avec la surface d'appui et de positionnement (210) du coulant support (200), les surfaces de contact intérieures (312 et 322) des deux rondelles (310 et 320) définissant un plan incliné par rapport auxdites surfaces extérieures (311 et 321) desdites rondelles (310 et 320) et constitué par les surfaces intérieures (312 et 322) en pente desdites rondelles (310 et 320), ces dernières adoptant une position dite neutre l'une par rapport à l'autre de façon à ce que les plans d'appui définis par les surfaces extérieures (311 et 321) desdites rondelles (310 et 320) soient sensiblement parallèles et que tout déplacement en rotation d'une rondelle par rapport à l'autre à partir de cette position neutre provoque le déplacement angulaire du corps (100) par rapport audit support (200), lesdites rondelles (310 et 320) sont emmanchées sur le corps arrière cylindrique (120) de ladite électro-broche (110), et réalisées de telle façon que leur diamètre extérieur soit supérieur au diamètre du cylindre formé par l'épaulement (210) ménagé dans le coulant (200), chaque rondelle (310 et 320) comportant une languette autorisant sa rotation, de sorte que la rotation selon un premier angle de l'ensemble formé par les deux rondelles (310 et 320) autour de leur axe de rotation associée à la rotation selon un deuxième angle des deux rondelles (310 et 320) indépendamment l'une de l'autre et en sens inverse, permette la correction du positionnement de l'axe (A) de l'électro-broche (100) par rapport à son coulant support (200).

2. Ensemble selon la revendication 1, **CARACTÉRISÉ PAR LE FAIT QUE** chaque languette (313 et 323) est réalisé de façon à ce qu'elle dépasse par rapport au diamètre extérieur de la collerette d'appui (110) de l'électro-broche (100).

3. Ensemble selon la revendication 1, **CARACTÉRISÉ PAR LE FAIT QUE** lesdites rondelles (310 et 320) ne comportent aucun moyen de fixation entre elles ou avec les surfaces avec lesquelles elles sont en contact.

4. Ensemble selon la revendication 1, **CARACTÉRISÉ PAR LE FAIT QUE** les rondelles (310 et 320) et les languettes (313 et 323) y associées ne dépassent pas le diamètre de la portion cylindrique du coulant (200) dans laquelle elles sont introduites.

5. Ensemble selon la revendication 1, **CARACTÉRISÉ PAR LE FAIT QUE** le maintien en position des rondelles (310 et 320) entre elles est réalisé par les moyens de maintien en position de l'électro-broche (100) dans le coulant (200).

6. Ensemble selon les revendications 1 et 2, **CARACTÉRISÉ PAR LE FAIT QUE** ledit coulant (200) comporte des moyens de repérage de la course angulaire réalisée par lesdites languettes (313 et 323).

7. Ensemble selon la revendication 1, **CARACTÉRISÉ PAR LE FAIT QU'**une des susdites surfaces d'appui et de positionnement (210 ou 110) se substitue à une des deux rondelles.

8. Ensemble selon la revendication 1, **CARACTÉRISÉ PAR LE FAIT QU'**au moins une des deux rondelles (310 et 320) est ménagée d'au moins une ouverture autorisant les tiges filetées ou non des moyens de fixation (500) de l'électro-broche (100) dans le coulant (200), à traverser ladite rondelle (310 ou 320) et la maintenir une fois positionnée.

## Patentansprüche

1. Aufbau bestehend aus einer manuellen Korrekturanordnung, einer Elektrospindel (100) und einer Hülse (200), wobei der Aufbau die Korrektur der Positionierung der Achse (A) einer Elektrospindel (100) bezüglich der Hülse ermöglicht, in die sie eingesetzt ist, wobei die Elektrospindel einen Stützflansch (110) und ein zylindrisches rückwärtiges Bauteil (120) aufweist und die Hülse (200) ebenfalls eine Stützfläche (210) aufweist und wobei die Anordnung derart aufgebaut ist, dass sie aus dem Zusammenbau zweier Scheibenringe (310) und (320) besteht, welche Einstellkeile bilden, die im ständigen Kontakt miteinander stehen und die zwischen dem Flansch (110) und der Stütz- und Positionierfläche (210) der Hülse (200) eingesetzt sind, wobei ein erster Scheibenring (310) zur Einstellung mit seiner Aussenfläche (311) mit dem Stützflansch (110) der Elektrospindel (100) und der zweite Scheibenring (320) mit seiner Aussenfläche (321) mit der Stütz- und Positionierfläche (210) der als Träger dienenden Hülse (200) in Kontakt steht, während die inneren Kontaktflächen (312 und 322) der beiden Scheibenringe (310 und 320) eine Ebene bilden, die geneigt ist bezüglich der Aussenflächen (311 und 321) der Scheibenringe (310 und 320) und die durch die schrägen Innenflächen (312 und 322) der Scheibenringe (310 und 320) geformt wird, wobei letztere eine sogenannte Neutralstellung relativ zueinander einnehmen, derart, dass die durch die Aussenflächen (311 und 321) der Scheibenringe (310 und 320) definierten Stützebenen im wesentlichen parallel sind und dass jegliche Drehverschiebung eines Scheibenringes relativ zum anderen, ausgehend von dieser Neutralstellung, eine Winkelverdrehung des Bauteils (100) bezüglich des Trägers (200) bewirkt, wobei die Scheibenringe (310 und 320) auf dem rückwärtigen zylindrischen Bauteil (120) der Elektrospindel (100) aufgesetzt sind und derart ausgestaltet sind, dass ihr Aussendurchmesser grösser ist als der Durchmesser der in der Hülse (200) ausgebildeten Schulter (210), wobei jeder Scheibenring (310 und 320) einen Vorsprung aufweist, der seine Verdrehung derart ermöglicht, dass eine Verdrehung um einen ersten Winkel des aus den beiden Scheibenringen (310 und 320) bestehenden Aufbaus um ihre Drehachse im Zusammenhang mit einer Verdrehung um einen zweiten Winkel der beiden Scheibenringe (310 und 320) unabhängig voneinander und in entgegengesetzter Richtung eine Korrektur der Positionierung der Achse (A) der Elektrospindel (100) bezüglich ihrer als Träger dienenden Hülse (200) ermöglicht.

2. Aufbau nach Anspruch 1, **dadurch gekennzeichnet, dass** jeder Vorsprung (313 und 323) derart ausgebildet ist, dass er den Aussendurchmesser des Stützflansches (110) der Elektrospindel (100) überragt.

3. Aufbau nach Anspruch 1, **dadurch gekennzeichnet, dass** die Scheibenringe (310 und 320) keine Anordnung zur Befestigung miteinander oder mit den mit ihnen in Kontakt stehenden Flächen aufweisen.

4. Aufbau nach Anspruch 1, **dadurch gekennzeichnet, dass** die Scheibenringe (310 und 320) und die ihnen zugeordneten Vorsprünge (313 und 323) den Durchmesser des zylindrischen Abschnitts der Hülse (200), in der sie eingesetzt sind, nicht überragen.

5. Aufbau nach Anspruch 1, **dadurch gekennzeichnet, dass** die Relativstellung der beiden Scheibenringe (310 und 320) zueinander durch die Anordnung zur Feststellung der Elektrospindel (100) in der Hülse (200) erfolgt.

6. Aufbau nach Ansprüchen 1 und 2, **dadurch gekennzeichnet, dass** die Hülse (200) eine Anordnung zur Bestimmung des durch die Vorsprünge (313 und 323) zurückgelegten Winkelweges aufweist.

7. Aufbau nach Anspruch 1, **dadurch gekennzeichnet, dass** eine der Stütz- und Positionierflächen (210 oder 110) auf einem der beiden Scheibenringe ausgebildet ist.

8. Aufbau nach Anspruch 1, **dadurch gekennzeichnet, dass** mindestens einer der Scheibenringe (310 und 320) mit wenigstens einer Öffnung versehen ist um es den mit oder ohne Gewinde versehenen Stäben der Anordnung (500) zur Befestigung der Elektrospindel (100) in der Hülse (200) zu ermöglichen, den Scheibenring (310 oder 320) zu durchsetzen und nach erfolgter Positionierung festzustellen.

## Claims

1. Assembly comprised of a manual correcting device, of an electrobroach (100) and of a runner (200), said assembly ensuring the positioning correction of axis (A) of an electrobroach (100) with respect to the runner in which it is inserted, said electrobroach being comprised of a support flange (110) and a back cylindrical body (120), said runner (200) being also comprised of a support surface (210), said device being constituted of the association of two washers (310 and 320) forming adjusting wedges being constantly into contact with each other coming into place between said flange (110) and said support and positioning surface (210) of the runner (200), a first adjusting washer (310) being into contact on its outer surface (311) with the support flange (110) of the electrobroach (100) and the second adjusting washer (320) being into contact on its outer surface (321) with the support and positioning surface (210) of the support runner (200), the inner contact surfaces (312 and 322) of the two washers (310 and 320) defining an inclined plane with respect to said outer surfaces (311 and 321) of said washers (310 and 320) and constituted of the inner slopy surfaces (312 and 322) of said washers (310 and 320), the latter adopting a position called neutral with respect to each other, so that the support planes defined by the outer surfaces (311 and 321) of said washers (310 and 320) are more or less parallel and that any rotational displacement of a washer with respec to the other starting from such neutral position will provoque the angular displacement of the body (100) with respect to said support (200), said washers (310 and 320) are inserted on the back cylindrical body (120) of said electrobroach (110), and manufactured in such a way that their outer diameter is greater than the diameter of the cylinder formed by the shoulder (210) provided in the runner (200), each washer (310 and 320) being provided with a tongue allowing its rotation, so that the rotation with respect to a first angle of the assembly formed by the two washers (310 and 320) around their rotation axis associated to the rotation with respect to a second angle of the two washers (310 and 320), independently from one another and in the reversed direction, allows the correction of the positioning of axis (A) of the electrobroach (100) with respect to its support runner (200).

2. Assembly according to claim 1, wherein each tongue (313 and 323) is manufactured so that it extends beyond the outer diameter of the support flange (110) of the electrobroach (100).

3. Assembly according to claim 1, wherein said washers (310 and 320) are not provided with any means of fixation between each other or with the surfaces they are in contact with.

4. Assembly according to claim 1, wherein the washers (310 and 320) and the tongues (313 and 323) associated therewith do not extend beyond the diameter of the cylindrical portion of the runner (200) in which they are introduced.

5. Assembly according to claim 1, wherein the washers (310 and 320) are maintained into position with respect to each other by means of position maintaining means of the electrobroach (100) in the runner (200).

6. Assembly according to claims 1 and 2, wherein said runner (200) is provided with means for position finding of the angular displacement made by said tongues (313 and 323).

7. Assembly according to claim 1, wherein one of the aforementioned support and positioning surfaces (210 or 110) is substituted to one of the two washers.

8. Assembly according to claim 1, wherein at least one of the two washers (310 and 320) is provided with at least one opening allowing the rods, threaded or not, of the fixation means (500) of the electrobroach (100) in the runner (200) to pass through said washer (310 or 320) and to maintain it once it is positioned.
